# FASCICULE DE BREVET EUROPEEN

(11) **EP 2 817 865 B1**
(45) Date de publication et mention de la délivrance du brevet: **14.09.2016**
(21) Numéro de dépôt: 13706602.3
(22) Date de dépôt: 31.01.2013
(51) Int. Cl.: H02J 7/14, H02J 7/34, B60W 10/26, B60R 16/033

(54) **PROCÉDÉ DE GESTION DE L'ÉNERGIE ÉLECTRIQUE D'UNE ARCHITECTURE ÉLECTRIQUE D'UN VÉHICULE AUTOMOBILE ET VÉHICULE AUTOMOBILE METTANT EN OEUVRE UN TEL PROCÉDÉ**
VERFAHREN ZUR VERWALTUNG DER ELEKTRISCHEN ENERGIE EINER ELEKTRISCHEN ARCHITEKTUR EINES KRAFTFAHRZEUGS UND KRAFTFAHRZEUG MIT EINEM SOLCHEN VERFAHREN
METHOD FOR MANAGING THE ELECTRICAL ENERGY OF AN ELECTRICAL ARCHITECTURE OF A MOTOR VEHICLE, AND MOTOR VEHICLE IMPLEMENTING SUCH A METHOD

(30) Priorité: 21.02.2012 FR 1251566
(43) Date de publication de la demande: 31.12.2014
(73) Titulaire: Peugeot Citroën Automobiles SA, 78140 Vélizy Villacoublay (FR)
(72) Inventeur: COMTE, Raphael, F-77380 Combs La Ville (FR); BELKHIRI, Abdeslam, F-92110 Clichy (FR); BOUCLY, Bernard, F-78150 Le Chesnay (FR)
(86) Numéro de dépôt international: PCT/FR2013/050199
(87) Numéro de publication internationale: WO 2013/124561

(56) Documents cités:
- EP-A1- 2 259 421
- JP-A- 9 309 392
- US-A1- 2006 028 778

## Description

### Domaine technique de l'invention

La présente invention se rapporte à un procédé de gestion de l'énergie électrique d'une architecture électrique d'un véhicule automobile.

L'invention porte aussi sur un véhicule automobile mettant en oeuvre un tel procédé.

### Arrière-plan technologique

Certaines architectures électriques de véhicule automobile comprennent un alternateur et un stockeur d'énergie électrique (comme par exemple une batterie traditionnelle au plomb 12V pour automobile), qui sont chargés d'alimenter en tension un ou plusieurs organes électriques de façon permanente ou commutée. C'est par exemple le cas des réseaux de bord de véhicule. Selon une architecture classique, la batterie est en permanence connectée en parallèle à l'alternateur et au réseau de bord.

Classiquement encore, un alternateur répond à une consigne de mise en charge progressive qui limite l'accroissement du courant. Cette consigne de mise en charge progressive, par exemple 20 A/sec est variable et peut dépendre de nombreux paramètres, par exemple le régime moteur. La fonction de charge progressive permet notamment d'éviter le calage du moteur du véhicule à bas régime, par exemple au ralenti. Dans cet exemple encore, si un consommateur électrique ayant une dynamique en courant supérieure à 20 A/sec, l'alternateur ne saura pas fournir la puissance demandée. Dans cette architecture électrique classique de véhicule automobile, où la batterie est en permanence connectée en parallèle à l'alternateur et au réseau de bord, celle-ci répond en complément de l'alternateur lorsque son temps de réponse est inférieur à la dynamique de l'organe qui s'est activé et permet tout de même de jouer un rôle de tampon.

Par ailleurs, l'apparition des alternateurs pilotés a conduit à élaborer des stratégies de modulation de la tension de sortie en vue d'obtenir un gain substantiel de consommation de véhicule. A cet effet, des phases de vie du véhicule permettant une récupération d'énergie telles que la vitesse du véhicule, la décélération du véhicule ont été prises en compte pour déterminer une tension de sortie adaptée dans la perspective de limiter au mieux la consommation du véhicule pendant chacune de ces phases. Certains véhicules automobiles sont donc équipés d'une fonction de récupération d'énergie au cours de laquelle, la batterie reçoit un courant de recharge important. Pour que ce courant s'établisse, il est nécessaire d'élever la tension aux bornes de la batterie pour s'affranchir de la résistance interne de la batterie et de celle des connexions reliant la batterie à la machine électrique produisant le courant.

Cependant cette architecture électrique classique de véhicule automobile impose une forte dépendance sur les échanges énergétiques. Il en résulte des inconvénients:
- lors d'une phase de recharge du d'énergie électrique, l'alternateur augmente la tension de régulation permettant la recharge. Cependant le reste du réseau de bord est soumis à la même tension et par conséquent surconsomme. Par exemple lorsque l'alternateur impose une tension de 15V pour recharger le stockeur d'énergie électrique, tous les organes de type résistif ou moteur électrique vont se mettre à surconsommer une puissance électrique supplémentaire non nécessaire pour garantir la prestation et qui se traduit par une surconsommation en carburant et une augmentation du rejet de CO2. Par ailleurs, cette élévation de tension induit un vieillissement prématuré des composants du réseau de bord comme par exemple, les moyens d'éclairage ou encore les composants électroniques.
- Certains organes du réseau de bord peuvent, lorsqu'ils sont sollicités, imposer une tension de régulation minimum sur tout le réseau de bord. Par exemple un essuie vitre, lorsqu'il est activé, a besoin d'une tension minimum de 14V à ses bornes pour garantir son fonctionnement optimal. Cette contrainte impose donc que l'alternateur régule à 14V générant ainsi une recharge forcée du stockeur d'énergie électrique qui n'est pas forcément souhaitée.

On connait par ailleurs de la demande de brevet déposée par la demanderesse sous le n°d'enregistrement FR1150072, un dispositif électronique formé d'un ensemble de convertisseur courant continu/ courant continu, encore dénommé convertisseur DC/DC réversible disposé dans une architecture électrique de véhicule automobile. Le convertisseur DC/DC réversible comprend une entrée et une sortie et est connecté par l'entrée à un alternateur et au réseau de bord, par la sortie à une batterie. Le convertisseur DC/DC comprend les modes de fonctionnement suivants :
- un mode passant : le convertisseur DC/DC se comporte comme un interrupteur fermé.
- un mode ouvert : le convertisseur DC/DC se comporte comme un interrupteur ouvert.
- un mode élévateur ou abaisseur de tension de la sortie par rapport à l'entrée pour un courant circulant dans le convertisseur DC/DC de l'entrée vers la sortie, donc de l'alternateur vers la batterie ce qui autorise la recharge de celle-ci.
- un mode élévateur ou abaisseur de tension de l'entrée par rapport à la sortie pour un courant circulant dans le convertisseur DC/DC de la sortie vers l'entrée.

Les deux derniers modes de fonctionnement permettent d'obtenir une tension aux bornes de la batterie différente du reste du réseau de bord. Ainsi il est possible de recharger la batterie en imposant une tension à ses bornes indépendamment du reste du réseau de bord. Par exemple, la batterie pourrait se recharger sous 16 V tandis que le reste du réseau de bord est à 12V.

Pour profiter au maximum des situations de vies permettant de recharger la batterie, il est préférable d'appliquer une dynamique du courant de recharge de la batterie élevée, par exemple 200 A/sec. Cependant la batterie telle qu'elle est connectée dans l'architecture électrique présentée, ne peut plus jouer le rôle de tampon comme elle le ferait dans l'architecture classique présentée en début de partie. De ce fait, lorsque le convertisseur DC/DC est piloté pour recharger la batterie il existe un risque que la tension de réseau de bord s'écroule et atteigne un seuil minimal pouvant provoquer par exemple une réinitialisation des calculateurs (« reset » en anglais) et donc un risque sécuritaire pour le client.

On identifie également le document US 2006/028778 A1 publié le 9 février 2006 qui décrit un procédé de gestion de l'énergie électrique d'une architecture électrique d'un véhicule automobile selon le préambule de la revendication indépendante 1.

Il existe un besoin permanent d'amélioration de la stratégie de gestion de l'énergie électrique des architectures électriques de véhicule dans la perspective de limiter au mieux la consommation du véhicule, tout en conservant des prestations optimales des organes de réseau de bord.

L'invention porte ainsi sur un procédé de gestion de l'énergie électrique d'une architecture électrique d'un véhicule automobile comprenant un stockeur d'énergie électrique, un réseau de bord comprenant des organes électriques, un générateur, un convertisseur DC/DC comprenant une entrée reliée au stockeur d'énergie électrique ainsi qu'une sortie reliée au réseau de bord et au générateur, des moyens de contrôle permettant de commander le générateur à une première consigne de charge progressive déterminée et le convertisseur DC/DC selon au moins un mode fonctionnement permettant la recharge du stockeur, procédé caractérisé en ce que lorsque le convertisseur DC/DC est commandé en mode de fonctionnement permettant la recharge du stockeur, la dynamique du courant consommé par le convertisseur DC/DC est régulée par l'application d'une seconde consigne de charge progressive sur le courant fourni par le convertisseur DC/DC au stockeur, la seconde consigne de charge progressive appliquée est inférieure ou égale à la première consigne de charge progressive du générateur.

Dans une variante, la seconde consigne de charge progressive est adaptée au cours de la recharge du stockeur.

De préférence, le procédé comprend la détermination des consignes de régulation en courant et/ ou en tension du convertisseur DC/DC par incrémentation au cours du temps d'un pas de consigne respectant l'application de la seconde consigne de charge progressive.

De préférence encore, dans l'étape de détermination des consignes de régulation du convertisseur DC/DC on fixe la consigne de régulation en tension et on adapte seulement la consigne de régulation en courant au cours de la recharge du stockeur.

De préférence, le procédé comprend la mesure de la tension de réseau de bord et dans le cas où la tension de réseau de bord est inférieur à un seuil bas, les consignes de régulation du convertisseur DC/DC 4 ne sont plus incrémentées ou sont décrémentées jusqu'à s'annuler.

Dans une autre variante, la seconde consigne de charge progressive est fixée à un seuil constant pendant la recharge du stockeur.

L'invention porte aussi sur un véhicule automobile équipé d'une architecture électrique comprenant un stockeur d'énergie électrique, un réseau de bord, un générateur, un convertisseur DC/DC comprenant une entrée reliée au stockeur d'énergie électrique ainsi qu'une sortie reliée au réseau de bord et au générateur, des moyens de contrôle permettant de piloter le convertisseur DC/DC ainsi que le générateur, caractérisé en ce que les moyens de contrôle sont configurés pour la mise en oeuvre du procédé de l'invention.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un véhicule automobile équipé d'une architecture électrique destinée à mettre en oeuvre le procédé de l'invention.
- La figure 2 est une représentation plus détaillée de l'architecture électrique présentée en figure 1.
- Les figures 3a à 3c illustrent respectivement l'état de fonctionnement du convertisseur DC/DC, le courant alternateur et le courant entrant dans le convertisseur DC/DC, la tension du réseau de bord avec et sans la procédure de l'invention.
- Les figures 4a et 4b illustrent respectivement en fonction du temps, t, un exemple de pilotage de la consigne de courant I_{consDCDC} du convertisseur DC/DC et de la tension de réseau de bord mesurée U_{RdB}, au cours d'une phase de recharge de la batterie.

### Description détaillée

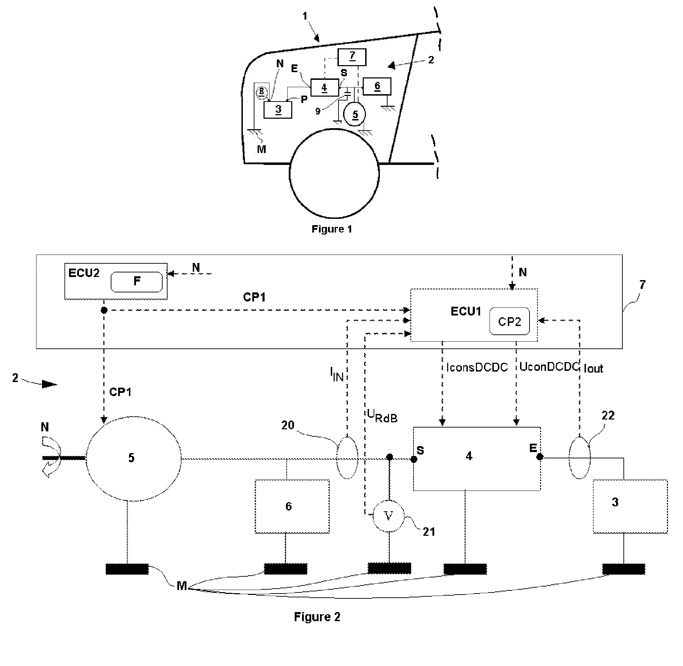

La figure 1 présente un véhicule automobile 1 comprenant une architecture électrique 2 comprenant un réseau de bord 6 alimenté en courant continu. Le réseau de bord 6 regroupe des organes électriques se comportant comme des charges dans le véhicule, et tolérant des variations de tension d'alimentation dans une certaine plage, par exemple entre 10,5 V et 16 V, comme par exemple l'éclairage du véhicule, un ordinateur de bord, un groupe de climatisation lorsque celui-ci est alimenté électriquement ou encore requérant une tension minimum de bon fonctionnement.

L'architecture électrique 2 comprend également un générateur 5 à tension de consigne continue modulable, comme par exemple un alternateur 5 piloté dont la tension de consigne, U_{consAlt}, lorsque celui-ci est en fonctionnement, est comprise entre un seuil minimum, par exemple de 12 V, et un seuil maximum, par exemple de 15 V. La tension de sortie de l'alternateur est alors modulée dans une plage en tension comprise entre le seuil de tension minimum et le seuil de tension maximum. L'alternateur 5 délivre un courant continu. A cet effet, il comprend des moyens de redressement du courant. La tension de consigne de l'alternateur 5 est adaptée à la tension requise par le réseau de bord 6 pour son bon fonctionnement. L'alternateur 5 est directement relié au réseau de bord 6. Un condensateur de filtrage 9 peut avantageusement être placé en parallèle de l'alternateur 5. Pour des raisons de compromis entre son coût et sa puissance, de préférence, la capacité de production électrique de l'alternateur 5 est choisie inférieure au besoin électrique maximum requis par le réseau de bord 6.

L'architecture électrique 2 comprend encore un stockeur d'énergie électrique comme par exemple une batterie 3 très basse tension, telle qu'une batterie dite 12V au plomb. Dans notre exemple, la tension que peut délivrer la batterie 3 est dépendante de son état de charge. Classiquement, la tension que peut délivrer la batterie 3 est comprise entre une tension minimum de l'ordre de 11,8 V lorsque son état de charge est faible, autrement dit environ 0% et une tension maximum de l'ordre de 12,8V pour une batterie dite de 12V, lorsque son état de charge est élevé, soit proche de 100%.

L'architecture électrique 2 comprend également un convertisseur continu/continu 4 (encore désigné ici comme convertisseur DC/DC) permettant d'alimenter le réseau de bord 6 à partir de la batterie 3. Le convertisseur continu/continu 4 comprend une première borne de connexion E et une seconde borne de connexion S. La première borne E est raccordée à une borne positive P de la batterie 3. La batterie 3 comprend une borne négative N raccordée à une masse électrique M. La batterie 3 peut également être équipée d'un dispositif 8 disposé sur la borne négative N permettant de mesurer son état de charge. Le réseau de bord 6 est raccordé entre la seconde borne S et la borne négative N de la batterie 3 par l'intermédiaire de la masse électrique M. L'alternateur 5 est aussi raccordé entre la seconde borne S et la borne négative N de la batterie 3 par l'intermédiaire de la masse électrique M.

L'architecture électrique 2 comprend de plus des moyens de contrôle 7 configurés pour commander le convertisseur DC/DC 4 selon un mode de fonctionnement déterminé.

Le convertisseur DC/DC 4 peut être commandé selon au moins le mode de fonctionnement suivant :
- un mode élévateur ou abaisseur de tension de la première connexion E par rapport à la seconde connexion S pour un courant circulant dans le convertisseur DC/DC 4 de la connexion S vers la connexion E, ce qui permet d'envoyer du courant de l'alternateur 5 vers la batterie 3 et ainsi de la recharger. Lorsque la tension à la connexion E est supérieure à un seuil de tension, Uᵣ, correspond au seuil de tension à appliquer à la batterie 3 pour vaincre sa résistance interne, la batterie 3 se recharge. Pour une batterie 3 traditionnelle de 12 V, le seuil de tension, Uᵣ, peut-être par exemple un seuil de 15 V. Par simplification nous désignerons dans la suite de ce mémoire ce mode comme « mode recharge ».

Le convertisseur DC/DC 4 peut encore être commandé selon les modes de fonctionnement suivants :
- un mode passant : le convertisseur DC/DC 4 se comporte alors comme un interrupteur fermé,
- un mode ouvert : le convertisseur DC/DC 4 se comporte alors comme un interrupteur ouvert,

Dans le cas où le convertisseur DC/DC 4 est un convertisseur DC/DC réversible il peut aussi être commandé selon le mode de fonctionnement suivant :
- un mode élévateur ou abaisseur de tension de la seconde connexion S par rapport à la première connexion E pour un courant circulant dans le convertisseur DC/DC 4 de la connexion E vers la connexion S, ce qui permet de fournir du courant au réseau de bord 6.

Ces modes de fonctionnement permettent d'obtenir à volonté une tension coté batterie égale ou différente de la tension coté réseau de bord. Ces modes de fonctionnement autorisent une gestion optimisée de l'énergie électrique de l'architecture électrique 2.

La figure 2 présente plus en détail l'architecture électrique 2.

Afin notamment d'éviter le calage du moteur thermique lorsque celui-ci fonctionne à basse vitesse, particulièrement en régime de ralenti, ou sur des variations brutales de charge ou de couple moteur et que des charges électriques importantes sont activées dans le véhicule, le pilotage de l'alternateur 5 comprend une fonction F de charge progressive. La fonction F de charge progressive est dépendante de paramètres moteur dont au moins le régime moteur. Ainsi, en cours de fonctionnement du moteur, l'alternateur 5 est commandé à une première consigne de charge progressive, CP1 issue de la fonction de charge progressive.

L'alternateur 5 est commandé par les moyens de contrôle 7. Les moyens de contrôle 7 peuvent comprendre des Unités de Commandes Electroniques ECU 1, ECU 2 distinctes ou une Unité de Commande Electronique commune pour les commandes du convertisseur DC/DC 4 et de l'alternateur 5.

L'architecture électrique 2 comprend encore des moyens 20 de mesure du courant I_{IN} consommé par le convertisseur DC/DC 4. L'architecture électrique 2 peut encore comprendre des moyens 21 de mesure de tension du réseau de bord, U_{RdB} de la seconde borne de connexion du convertisseur DC/DC 4 et des moyens 22 de mesures du courant I_{OUT} du courant circulant par la première connexion E reliée à la batterie 3. Lors d'une recharge de batterie le courant, I_{OUT}, est aussi désigné dans la suite de ce mémoire comme « courant de recharge ».

Les moyens de mesure 20, 21, 22 fournissent aux moyens de contrôle 7 leur information de courant et de tension respective.

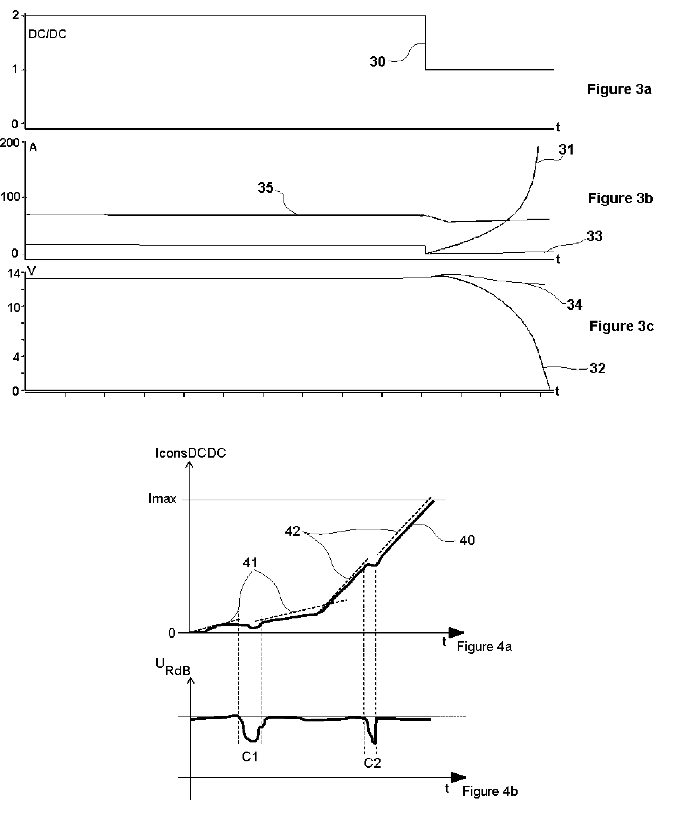

La figure 3a présente une courbe 30 illustrant le passage d'un mode de fonctionnement du convertisseur DC/DC (état 2) dans lequel le convertisseur DC/DC est commandé en mode passant à un mode de fonctionnement du convertisseur DC/DC (état 1) dans lequel le convertisseur DC/DC 4 est commandé en mode recharge. Le mode recharge peut être avantageusement commandé en cas de détection d'une décélération du véhicule, ce qui permet de faire de la récupération d'énergie.

Sur la figure 3b, la courbe 35 représente la variation du courant de l'alternateur 5 lors du changement de mode de fonctionnement. Le temps de réponse de l'alternateur 5, limité par la première consigne de charge progressive CP1 par exemple à 20 A/sec, est inférieur à celui de la recharge de la batterie 3, celui-ci de n'a pas la capacité à fournir la puissance demandée pour la recharge de la batterie 3. Par conséquent, dans le cas où la procédure de l'invention n'est pas appliquée, comme le montre la courbe 31, le courant I_{N} à l'entrée du convertisseur DC/DC 4, c'est-à-dire au niveau de la connexion S du convertisseur DC/DC 4, augmente tandis que la tension de réseau de bord, U_{RdB}, s'écroule (courbe 32, figure 3c), ce qui crée un risque de perte de fonction du réseau de bord 6.

En revanche, dans le cas où la procédure de l'invention est appliquée, le convertisseur DC/DC 4 est commandé de sorte que le courant I_{IN} à l'entrée du convertisseur DC/DC 4 (courbe 33) ainsi que la tension U_{RdB}, (courbe 34, figure 3c) soient régulés.

Pour ce faire, conformément à l'invention, lorsque le convertisseur DC/DC 4 est commandé en mode recharge de la batterie 3, la dynamique du courant consommé, c'est-à-dire le taux d'accroissement du courant entrant, I_{IN}, dans le convertisseur DC/DC 4, est régulée par l'application d'une seconde consigne de charge progressive, CP2, sur le courant fourni, Iₒᵤₜ, par le convertisseur DC/DC 4 au stockeur 3. Cette régulation permet de limiter la prise de puissance au niveau du réseau de bord 6 pour respecter la dynamique en courant de l'alternateur 5. La dynamique du courant consommé dans le convertisseur DC/DC 4 correspond à la dérivée temporelle du courant I_{IN} à l'entrée du convertisseur DC/DC 4, soit dI_{IN}/dt.

De préférence, la seconde consigne de charge progressive, CP2, appliquée est inférieure ou égale à la première consigne de charge progressive CP1 de l'alternateur 5, ce qui permet de limiter le courant I_{IN} consommé par le convertisseur DC/DC 4 et d'optimiser la phase de recharge de la batterie 3 en allouant à ce dernier la juste valeur de courant qui permet d'utiliser l'alternateur 5 sans dégrader les prestations du réseau de bord 6.

Dans une variante qui permet une gestion simplifiée des moyens de contrôle 7, la seconde consigne de charge progressive, CP2, appliquée est fixée à un seuil constant, Sc, au cours de la recharge de la batterie 3.

Dans une autre variante qui permet de profiter au maximum de la phase de recharge, la seconde consigne de charge progressive, CP2, est adaptée au cours de la recharge de la batterie 3.

Avantageusement, pour l'une ou l'autre des variantes, le seuil constant Sc est choisi inférieur au minimum de première charge progressive CP1 garanti par l'alternateur 5, ce qui permet de respecter sa dynamique de courant. Par exemple, si le minimum de première charge progressive CP1 est de 20A/sec, le seuil constant, Sc, peut être choisi à 15 A/sec.

La figure 4a présentent maintenant en fonction du temps, t, un exemple de pilotage de la consigne de régulation de courant I_{consDCDC} du convertisseur DC/DC 4 et du courant de recharge résultant (courbe 40, figure 4a) en fonction de la première consigne de charge progressive CP1, au cours d'une recharge de la batterie 3. La figure 4b dans le même temps l'évolution de la tension de réseau de bord, U_{RdB}.

Dans l'exemple illustré par la figure 4a, la première consigne de charge progressive CP1 présente une première valeur de consigne, par exemple de 20 A/sec désignée par la courbe pointillée 41 et une seconde valeur de consigne par exemple de 60 A/sec désignée par la courbe pointillée 42.

Sur la figure 4a, la consigne Iₘₐₓ correspond à la consigne de courant maximum applicable au convertisseur DC/DC 4. Cette consigne, Iₘₐₓ, est définie en fonction de la réserve que l'alternateur 5 peut fournir. La consigne de régulation de courant I_{consDCDC} peut donc varier de 0 à Iₘₐₓ.

Le convertisseur DC/DC 4 est aussi piloté par une consigne de régulation en tension, U_{consDCDC}. Cette consigne de régulation en tension peut varier entre 0 et une consigne de tension maximum, Uₘₐₓ. Cette consigne, Uₘₐₓ, dans le cas d'une recharge de la batterie est définie en fonction de l'état de la batterie 3, qui peut être déterminé par exemple à partir de sa température et de son niveau de charge. De préférence, la consigne, Uₘₐₓ, est au moins égal au seuil de tension, Uᵣ, à appliquer à la batterie 3 pour vaincre sa résistance interne et permettre sa recharge.

Le convertisseur DC/DC 4 peut être piloté par l'adaptation des consigne de régulation en courant, I_{consDCDC}, et ou de tension, U_{consDCDC} en respectant l'application de la seconde consigne de charge progressive, CP2, cependant pour des raisons de simplicité de gestion des moyens de contrôle 7, il est préférable de ne gérer qu'une consigne de régulation du convertisseur DC/DC 4 pour la modification de la dynamique de courant dI_{IN}/dt. De préférence, on fixe la consigne de régulation en tension, U_{consDCDC}, et on adapte seulement la consigne de régulation en courant, I_{consDCDC}, au cours de la recharge de la batterie 3, ce qui permet d'avoir une adaptation de la dynamique de courant, dI_{IN}/dt, plus fine et plus rapide que de modifier la consigne en tension U_{consDCDC}.

Avantageusement la consigne de régulation en tension, U_{consDCDC}, est fixée à une valeur de consigne de tension maximum, Uₘₐₓ au moins égale au seuil de tension, Uᵣ, nécessaire à la recharge de la batterie 3.

Dans ce cas, la consigne de courant, I_{consDCDC} du convertisseur DC/DC 4 est déterminée de sorte à limiter la dynamique de montée du courant de recharge, I_{OUT}, de 0 à Iₘₐₓ en respectant la seconde consigne de charge progressive CP2 (en A/s) à appliquer. Ainsi, au cours de la recharge de la batterie 3, la consigne de courant I_{consDCDC} du convertisseur DC/DC 4 est incrémentée au cours du temps à partir de 0 ampère au plus jusque Iₘₐₓ, si la durée de la recharge le permet, d'un pas de consigne qui est imposé par la consigne de seconde consigne de charge progressive CP2 à respecter.

Dans la mesure du possible, c'est-à-dire si la tension de réseau de bord est stable, de préférence, afin d'optimiser la recharge de la batterie 3, le convertisseur DC/DC 4 est piloté de sorte que la dynamique de montée du courant de recharge, I_{OUT}, respecte une seconde charge progressive CP2 égale à la première consigne de charge progressive CP1.

Sur la figure 4b, les zones C1 et C2 présentent par ailleurs deux cas de chutes de tension de réseau du réseau de bord 6. Cette variation trop brutale de la tension de réseau de bord 6 peut être la conséquence de l'activation d'un consommateur électrique du réseau de bord 6. Dans ce cas, la chute de tension du réseau de bord 6 entraine une augmentation du courant I_{IN} entrant dans le convertisseur DC/DC à une dynamique dI_{IN}/dt supérieure à celle de la première consigne de charge progressive CP1.

Dans ce cas, si la tension de réseau de bord U_{RdB} devient inférieure à un seuil bas, Sb, lui-même de préférence inférieur à la tension de sortie, U_{consalt}, de l'alternateur 5, la consigne de courant I_{consDCDC} du convertisseur DC/DC 4 n'est plus incrémentée, voire décrémentée pour corriger la dynamique de courant entrant, dI_{IN}/dt, dans le convertisseur DC/DC 4, ce qui revient à adapter la seconde consigne de charge progressive CP2 à appliquer sur le courant de recharge, Iₒᵤₜ pour corriger la dynamique de courant dI_{IN}/dt plus rapidement.

En résumé, au cours du fonctionnement en mode recharge du convertisseur DC/DC les étapes suivantes sont réalisées :
Pour la détermination de la dynamique du courant, dI_{IN}/dt, entrant dans le convertisseur DC/ DC 4 :
   - La lecture de la première consigne de charge progessive CP1,
   - La mesure du courant I_{IN} consommé par le convertisseur DC/DC 4,
   - la détermination de la dérivée, dI_{IN}/dt, du courant consommé par le convertisseur DC/DC 4,

Pour la régulation de cette dynamique :
- La comparaison de la dynamique dI_{IN}/dt, du courant consommé par le convertisseur DC/DC 4 avec la première consigne de charge progessive CP1,
- la détermination de la seconde consigne de charge progressive CP2 en fonction du résultat de la comparaison,
- la détermination des consignes de régulation en courant, I_{consDCDC} et/ ou une consigne de tension, U_{consDCDC}, du convertisseur DC/DC 4 par incrémentation au cours du temps d'un pas de consigne respectant l'application de la seconde consigne de charge progressive CP2.
- La mesure de la tension de réseau de bord U_{RdB} et dans le cas où la tension de réseau de bord est inférieur au seuil bas, S_{b}, les consignes de régulation en courant et/ou en tension I_{consDCDC}, U_{consDCDC} du convertisseur DC/DC 4 ne sont plus incrémentées ou sont décrémentées jusqu'à s'annuler.

Dans la variante où la seconde consigne de charge progressive CP2 est adaptée au fil du temps les étapes précédentes sont réalisées en boucle au cours de la recharge de la batterie 3, tant que le convertisseur DC/DC 4 est piloté en mode recharge.

Dans une variante, l'alternateur 5 peut être remplacé par un autre générateur à tension de régulation continue et modulable entre une tension de consigne minimum et une tension de consigne maximum, du type convertisseur de courant DC/DC ou encore un alterno-démarreur.

Dans une autre variante, le stockeur d'énergie électrique peut également être du type condensateur ou supercondensateur.

L'invention permet un meilleur contrôle des transferts énergétiques électriques dans le véhicule, un maintien des prestations de réseau de bord, que ces prestations soient sécuritaires ou non, lors d'une phase de recharge de la batterie.

## Revendications

1. Procédé de gestion de l'énergie électrique d'une architecture électrique (2) d'un véhicule automobile (1) comprenant un stockeur d'énergie électrique (3), un réseau de bord (6) comprenant des organes électriques, un générateur (5), un convertisseur DC/DC (4) comprenant une entrée (E) reliée au stockeur d'énergie électrique (3) ainsi qu'une sortie (S) reliée au réseau de bord (6) et au générateur (5), des moyens de contrôle (7) permettant de commander le générateur (5) à une première consigne de charge progressive (CP1) déterminée et le convertisseur DC/DC (4) selon au moins un mode fonctionnement permettant la recharge du stockeur (3), procédé **caractérisé en ce que** lorsque le convertisseur DC/DC (4) est commandé en mode de fonctionnement permettant la recharge du stockeur (3), la dynamique du courant consommé (dI_{IN}/dt) par le convertisseur DC/DC (4) est régulée par l'application d'une seconde consigne de charge progressive (CP2) sur le courant fourni (Iₒᵤₜ) par le convertisseur DC/DC (4) au stockeur (3), la seconde consigne de charge progressive (CP2) appliquée étant inférieure ou égale à la première consigne de charge progressive (CP1) du générateur (5).

2. Procédé selon la revendication 1, **caractérisé en ce que** la seconde consigne de charge progressive (CP2) est adaptée au cours de la recharge du stockeur (3).

3. Procédé selon l'une des revendication précédentes, **caractérisé en ce qu'**il comprend la détermination des consignes de régulation en courant (I_{consDCDC}) et/ ou en tension (U_{consDCDC}) du convertisseur DC/DC (4) par incrémentation au cours du temps d'un pas de consigne respectant l'application de la seconde consigne de charge progressive (CP2).

4. Procédé selon la revendication 3, **caractérisé en ce que** dans l'étape de détermination des consignes de régulation du convertisseur DC/DC (4) on fixe la consigne de régulation en tension (U_{consDCDC}) et on adapte seulement la consigne de régulation en courant (I_{consDCDC}) au cours de la recharge du stockeur (3).

5. Procédé selon l'une quelconque des revendications précédentes, **caractérisé en ce qu'**il comprend la mesure de la tension de réseau de bord (U_{RdB}) et dans le cas où la tension de réseau de bord est inférieur à un seuil bas (S_{b}), les consignes de régulation (I_{consDCDC}, U_{consDCDC}) du convertisseur DC/DC 4 ne sont plus incrémentées ou sont décrémentées jusqu'à s'annuler.

6. Procédé selon la revendication 1, **caractérisé en ce que** la seconde consigne de charge progressive (CP2) est fixée à un seuil constant (Sc) pendant la recharge du stockeur (3).

7. Véhicule automobile (1) équipé d'une architecture électrique (2) comprenant un stockeur d'énergie électrique (3), un réseau de bord (6), un générateur (5), un convertisseur DC/DC (4) comprenant une entrée (E) reliée au stockeur d'énergie électrique (3) ainsi qu'une sortie (S) reliée au réseau de bord (6) et au générateur (5), des moyens de contrôle (7) permettant de piloter le convertisseur DC/DC (4) ainsi que le générateur (5), **caractérisé en ce que** les moyens de contrôle (7) sont configurés pour la mise en oeuvre du procédé selon l'une des revendications précédentes.

## Patentansprüche

1. Verfahren zur Verwaltung der elektrischen Energie einer elektrischen Architektur (2) eines Kraftfahrzeugs (1), die einen Speicher elektrischer Energie (3), ein Bordnetzwerk (6), das elektrische Organe umfasst, einen Generator (5), einen Gleichstrom-/Gleichstromwandler (4), der einen Eingang (E), der mit dem Speicher elektrischer Energie (3) verbunden ist, sowie einen Ausgang (D), der mit dem Bordnetzwerk (6) und dem Generator (5) verbunden ist, umfasst, Steuermittel (7), die das Steuern des Generators (5) auf einen ersten bestimmten allmählichen Ladesollwert (CP1) und des Gleichstrom-/Gleichstromwandlers (4) gemäß mindestens einem Betriebsmodus zu steuern, der das Aufladen des Speichers (3) erlaubt, umfasst, Verfahren **dadurch gekennzeichnet, dass**, wenn der Gleichstrom-/Gleichstromwandler (4) in dem Betriebsmodus, der das Aufladen des Speichers (3) erlaubt, gesteuert wird, die Dynamik des durch den Gleichstrom-/Gleichstromwandler (4) verbrauchten Stroms (dI_{IN}/dt) durch Anwenden eines zweiten allmählichen Ladesollwerts (CP2) an den von dem Gleichstrom-/Gleichstromwandler (4) an den Speicher (3) gelieferten Strom (Iₒᵤₜ) reguliert wird, wobei der angewandte zweite allmähliche Ladesollwert (CP2) kleiner oder gleich dem ersten allmählichen Ladesollwert (CP1) des Generators (5) ist.

2. Verfahren nach Anspruch 1, **dadurch gekennzeichnet, dass** der zweite allmähliche Ladesollwert (CP2) im Laufe des Aufladens des Speichers (3) angepasst wird.

3. Verfahren nach einem der vorhergehenden Ansprüche, **dadurch gekennzeichnet, dass** es das Bestimmen der Stromreguliersollwerte (I_{consDCDC}) und/oder Spannungsreguliersollwerte (U_{consDCDC}) des Gleichstrom-Gleichstromwandlers (4) durch Erhöhen im Laufe der Zeit eines Sollschritts, der das Anwenden des zweiten allmählichen Ladesollwerts (CP2) einhält, umfasst.

4. Verfahren nach Anspruch 3, **dadurch gekennzeichnet, dass** man bei dem Schritt des Bestimmens der Reguliersollwerte des Gleichstrom-/Gleichstromwandlers (4) den Spannungsreguliersollwert (U_{consDCDC}) festlegt und nur den Stromreguliersollwert (I_{consDCDC}) im Laufe des Aufladens des Speichers (3) anpasst.

5. Verfahren nach einem der vorhergehenden Ansprüche, **dadurch gekennzeichnet, dass** es das Messen der Spannung des Bordnetzes (U_{RdB}) umfasst und, in dem Fall, in dem die Spannung des Bordnetzwerks niedriger ist als ein unterer Schwellenwert (Sb), die Reguliersollwerte (I_{consDCDC}, U_{coriSDCDC}) des Gleichstrom-/Gleichstromwandlers (4) nicht mehr erhöht oder verringert werden, bis sie sich annullieren.

6. Verfahren nach Anspruch 1, **dadurch gekennzeichnet, dass** der zweite allmähliche Ladesollwert (CP2) während des Aufladens des Speichers (3) auf einen konstanten Sollwert (Sc) festgelegt wird.

7. Kraftfahrzeug (1), das mit einer elektrischen Architektur (2) ausgestattet ist, die einen Speicher elektrischer Energie (3), ein Bordnetzwerk (6), einen Generator (5), einen Gleichstrom-/Gleichstromwandler (4), der einen Eingang (E), der mit dem Speicher elektrischer Energie (3) verbunden ist, sowie einen Ausgang (S), der mit dem Bordnetzwerk (6) und dem Generator (5) verbunden ist, umfasst, Steuermittel (7), die das Steuern des Gleichstrom-Gleichstromwandlers (4) sowie des Generators (5) erlauben, umfasst, **dadurch gekennzeichnet, dass** die Steuermittel (7) konfiguriert sind, um das Verfahren nach einem der vorhergehenden Ansprüche umzusetzen.

## Claims

1. A method for managing the electrical energy of an electrical architecture (2) of a motor vehicle (1) comprising an electrical energy storage system (3), an on-board network (6) comprising electrical members, a generator (5), a DC/DC converter (4) comprising an input (E) connected to the electrical energy storage system (3) and an output (S) connected to the on-board network (6) and to the generator (5), control means (7) in order to control the generator (5) at a first predetermined progressive charge set point (CP1) and the DC/DC converter (4) according to at least one mode of operation permitting the charging of the storage system (3), method **characterized in that** when the DC/DC converter (4) is controlled in operating mode permitting the charging of the storage system (3), the dynamic of the current consumed (dI_{IN}/dt) by the DC/DC converter (4) is regulated by applying a second progressive charging set point (CP2) to the current supplied (lₒᵤₜ) by the DC/DC converter (4) to the storage system (3), the second applied progressive charging set point (CP2) being less than or equal to the first progressive charging set point (CP1) of the generator (5).

2. The method according to claim 1, **characterized in that** the second progressive charging set point (CP2) is adapted during the charging of the storage system (3).

3. The method according to one of the preceding claims, **characterized in that** it includes the determining of the current regulation set points (l_{consDCDC}) and/or voltage regulation set points (U_{consDCDC}) of the DC/DC converter (4) by incrementation during the time of a set point step respecting the application of the second progressive charging set point (CP2).

4. The method according to claim 3, **characterized in that** in the step of determining regulation set points of the DC/DC converter (4), the voltage regulation set point (U_{consDCDC}) is fixed and only the current regulation set point (l_{consDCDC}) is adapted during the charging of the storage system (3).

5. The method according to any one of the preceding claims, **characterized in that** it includes the measurement of the on-board network voltage (U_{RdB}) and in the case where the on-board network voltage is less than a lower threshold (S_{b}), the regulation set points (l_{consDCDC}, U_{consDCDC}) of the DC/DC converter (4) are no longer incremented or are decremented up to cancelling.

6. The method according to claim 1, **characterized in that** the second progressive charging set point (CP2) is fixed at a constant threshold (Sc) during the charging of the storage system (3).

7. A motor vehicle (1) equipped with an electrical architecture (2) including an electrical energy storage system (3), an on-board network (6), a generator (5), a DC/DC converter (4) comprising an input (E) connected to the electrical energy storage system (3) and an output (S) connected to the on-board network (6) and to the generator (5), control means (7) permitting the DC/DC converter (4) and the generator (5) to be controlled, **characterized in that** the control means (7) are configured to implement the method according to one of the preceding claims.
